# EUROPÄISCHE PATENTANMELDUNG

(11) **EP 4 796 786 A1**
(43) Veröffentlichungstag der Anmeldung: **26.08.2026**
(21) Anmeldenummer: 25159677.1
(22) Anmeldetag: 24.02.2025
(51) Int. Cl.: F04B 43/02, F16C 31/00, F16C 31/02, F04B 43/073

(54) **DOPPELMEMBRANPUMPE MIT VERBESSERTEM GLEITLAGER**

(71) Anmelder: Lutz Pumpen GmbH, 97877 Wertheim (DE)
(72) Erfinder: Schneider, Felix, 97900 Külsheim (DE)
(74) Vertreter: Christ, Niko

(57) **Zusammenfassung**

Bei bekannten Doppelmembranpumpen ist ein Mittelblock vorgesehen, welcher ein eingepresstes Gleitlager aufweist, in dem die Membranstange geführt ist. Insbesondere bei Doppelmembranpumpen nach dem Central Flow Prinzip, deren Strömungseffizienz besonders hoch ist, grenzt der Mittelblock daher an die Medienkammer an, so dass Reste des Mediums in die Stoßfugen zwischen Mittelblock und Gleitlager setzen und sich dort Keime bilden können.

Die Erfindung verhindert dies, indem der Mittelblock fugenlos hergestellt wird und die Membranstange eine Gleitbeschichtung erhält, welche die gesamte, das Medium kontaktierende Mantelfläche bedeckt. Hierdurch finden Keime keine Ansatzpunkte und die Doppelmembranpumpe ist erheblich leichter zu reinigen und hygienischer zu betreiben.

## Beschreibung

Die vorliegende Erfindung betrifft eine Doppelmembranpumpe mit zwei von einem Mittelblock separierten Membrankammern, in denen mithilfe jeweils einer Membran an den Mittelblock angrenzende Medienkammern abgegrenzt sind, wobei die Membranen durch eine Durchgriffsöffnung des Mittelblocks hindurch vermittels einer Membranstange miteinander verbunden sind.

Doppelmembranpumpen, die nach dem Central-Flow-Prinzip arbeiten, zeichnen sich durch Ihre hohe Strömungseffizienz aus. Eine wesentliche Herausforderung bei diesem Aufbau ist die Verbindung der beiden Membranen, die in der Regel durch eine linear im Medium bewegte Membranstange erfolgt. Da die Membranstange durch den Mittelblock geführt wird, ist eine Gleitlagerung zwischen Mittelblock und Membranstange erforderlich.

Für den hygienischen Bereich werden Pumpen häufig aus Edelstahl gefertigt, da dieser Werkstoff durch seine Beständigkeit und Festigkeit überzeugt und effektiv gereinigt werden kann. Die Führung der Membranstange stellt jedoch im hygienischen Bereich oft ein Problem dar. Bei bekannten Ausführungen der nach dem Central-Flow-Prinzip betriebenen Doppelmembranpumpen wird ein Kunststoff-Gleitlager in den Mittelblock eingepresst, durch das die meist aus Edelstahl gefertigte Membranstange geführt wird. Eine Membranstange aus geeignetem Kunststoff kann nicht immer verwendet werden, insbesondere dann nicht, wenn hohe Axialkräfte auf diese einwirken. Bei Verwendung eines eingepressten Gleitlagers stellt sich die Frage, ob die Verbindungsstelle zwischen Mittelblock und Gleitlager hygienisch ist und bleibt, da sich Keime in den Randbereichen der Bauteile absetzen und vermehren können.

Vor diesem Hintergrund liegt der vorliegenden Erfindung die Aufgabe zu Grunde, eine Doppelmembranpumpe zu schaffen, bei der einerseits eine dauerhaft belastbare Gleitlagerung realisiert wird, aber eine hygienische Lösung geschaffen wird, in der eine Keimbildung in den Randbereichen zusammengefügter Bauteile vermieden werden kann.

Dies löst eine Doppelmembranpumpe mit den Merkmalen des unabhängigen Anspruchs 1. Sinnvolle Ausgestaltungen einer solchen Doppelmembranpumpe können den sich anschließenden abhängigen Ansprüchen entnommen werden.

Insoweit vorgesehen ist eine Doppelmembranpumpe mit zwei von einem Mittelblock separierten Membrankammern, in denen mithilfe jeweils einer Membran an den Mittelblock angrenzende Medienkammern abgegrenzt sind, wobei die Membranen durch eine Durchgriffsöffnung des Mittelblocks hindurch vermittels einer Membranstange miteinander verbunden sind. Eine solche Doppelmembranpumpe ist erfindungsgemäß dadurch gekennzeichnet, dass die Durchgriffsöffnung ein Gleitlager aufweist, welches die Membranstange kontaktiert und aus dem Material des Mittelblocks hergestellt ist, und die Membranstange eine Mantelfläche aufweist, welcher eine durchgehende Gleitbeschichtung zugeordnet ist.

Hierbei entsteht, wie bei den bekannten Pumpen, ein Gleitlager aus einer Gleitbeschichtung, welche über eine Materialoberfläche gleitet, jedoch entfällt das Einpressen eines Gleitlagers in den Mittelblock. Statt das Gleitlager in die Zwischenwand des Mittelblocks einzupressen wird stattdessen die Wand des Mittelblocks bis zur Durchgangsöffnung durchgehend aus einem Material hergestellt. Für mögliche Keime gibt es hierdurch keinen Ansatzpunkt, wo sie sich niederlassen und vermehren können, da keine Rillen zwischen den aufeinandertreffenden Bauteilen benötigt werden. Umgekehrt kann durch eine Beschichtung der ganzen Membranstange oder einer Mantelfläche der Membranstange ebenfalls die gleitfähige Gegenseite zu der Durchgangsöffnung geschaffen werden. Dadurch, dass die ganze Membranstange oder ihre Mantelfläche, also die Zylindermantelfläche, welche durch die Durchgangsöffnung gleitet, lückenlos und flächig beschichtet sind, kann auch dort keine Keimbildung erfolgen. Dies führt zu einer hygienischen und leicht zu reinigenden Doppelmembranpumpe.

In einer bevorzugten Ausgestaltung kann insbesondere vorgesehen sein, dass der Mittelblock beiderseits eine an die jeweilige Membran anschließende Medienkammerwandung einstückig und fugenlos ausbildet. Soweit die Medienkammer aus mehreren Bauteilen zusammengesetzt ist, kann in jeder Stoßfuge eine Keimbildung auftreten, so dass solche Stoßfugen grundsätzlich zu vermeiden sind. Die Stoßfuge zwischen Membran und Mittelblock kann aufgrund der Beweglichkeit des Materials der Membran nicht vermieden werden, aber durch eine Demontage der Membran kann diese leicht gereinigt werden. Der Mittelblock ist so lediglich ein einziges massives Bauelement, welches sehr leicht zu reinigen und robust und haltbar ist. Selbst bei einer Beschädigung der Gleitbeschichtung der Membranstange wäre die Membranstange vergleichsweise leicht zu tauschen, so dass die Lebensdauer der beschriebenen Lösung gegenüber dem Stand der Technik deutlich erhöht ist.

Weiter kann vorgesehen sein, dass an dem Mittelblock auftretende Kanten verrundet sind. Hierbei handelt es sich insbesondere um die Medienzu- und - abläufe. Soweit die Kanten hart sind, können hieran beim Reinigen unzugängliche Stellen verbleiben. Durch eine gleichmäßige Verrundung kann die Zugänglichkeit zum Reinigen weiter vergrößert werden und die Hygiene auch in diesem Bereich verbessert werden.

Insbesondere kann vorgesehen sein, dass der Mittelblock aus Edelstahl oder einer Edelstahllegierung hergestellt ist. Dieses Material ist besonders haltbar und gut zu reinigen und korrodiert nicht an der Luft. Auch reagiert es nicht mit den in der Doppelmembranpumpe geführten Medien, so dass diese unbeeinflusst von der Membranpumpe als solcher gefördert werden können.

In konkreter Ausgestaltung kann es weiter vorgesehen sein, dass die Membranstange endständige Verjüngungen zur Durchführung durch die Membranen aufweist, wobei die Gleitbeschichtung lediglich zwischen den Verjüngungen aufgebracht ist. Wenn die verjüngten Bereiche durch die Durchführungen der Membranen durchgeführt werden, liegen die Stirnflanken zwischen dem Mantelbereich und dem verjüngten Bereich ohnehin an den Membranen an. Hier ist üblicherweise eine Dichtung vorgesehen, so dass hier auch auf die Gleitbeschichtung verzichtet werden kann, da die besagte Kante ohnehin besteht. Ein Wegfall der Gleitbeschichtung bedeutet an dieser Stelle keinen Übergang und keine Nahtstelle, in der zusätzliche Keime auftreten könnten.

Zudem kann vorgesehen sein, dass die Membranstange endständige Anschlussmittel zur Verbindung mit einem Antrieb aufweist. Prinzipiell kann eine Doppelmembranpumpe nach dem Central-Flow-Prinzip auch allein pneumatisch betrieben werden. In einem solchen Fall kann die Membranstange auf beiden Seiten freibleiben und es wird abwechselnd hinter den Membranen, also in den Druckkammern gegenüber den jeweiligen Medienkammern, ein Treibmittel eingebracht, das die betreffende Membran betätigt. Die andere Membran wird über die Membranstange betätigt und verdrängt parallel das Treibmittel aus der anderen Druckkammer. Nach einem solchen Hub erfolgt der gleiche Vorgang in die umgekehrte Richtung. Wird aber ein elektrischer Antrieb eingesetzt, so kann ein Antriebsstößel mit der Membranstange verbunden werden und auf das Treibmittel kann verzichtet werden. Auch ein paralleler Einsatz der mechanischen und der pneumatischen Antriebsform kann genutzt werden. Alternativ zu einer endständigen Befestigung kann in ansonsten gleicher Art und Weise vorgesehen sein, dass die Membranstange als Hohlröhre ausgebildet ist, durch welche Anschlussmittel zur Verbindung mit einem Antrieb hindurchgeführt sind. Insbesondere kann dann ein Anschlusselement zur Verbindung mit dem Antrieb vorgesehen sein, welches mithilfe einer durchgehenden Schraube, die in einer Hülse geführt sein kann, an der Membranstange verbunden ist.

Bevorzugtermaßen kann es sich bei dem Antrieb um einen elektrischen oder pneumatischen Antrieb handeln und dieser als Ganzes mit einem Gehäuseteil an die Doppelmembranpumpe anbringbar sein. Dies erlaubt es, an einer Doppelmembranpumpe auch nach Bedarf den verwendeten Antrieb zu tauschen oder beiderseits Antriebe einzusetzen, falls die Anwendung dies erfordert.

Ähnlich wie beim Mittelblock kann auch die Membranstange aus Edelstahl oder einer Edelstahllegierung hergestellt sein. Ein solches Material kann erheblich größere Kräfte aufnehmen als eine Membranstange aus Kunststoff, so dass das Verhalten der Membranstange sich von den bekannten Membranstangen aus Edelstahl nicht unterscheidet.

Mit besonderem Vorteil kann vorgesehen sein, dass es sich bei der Gleitbeschichtung um eine Kunststoffbeschichtung, vorzugsweise eine Beschichtung aus Polytetrafluorethylen, handelt. Eine solche Beschichtung ist besonders gleitfähig, haltbar und reagiert nicht mit den geförderten Medien.

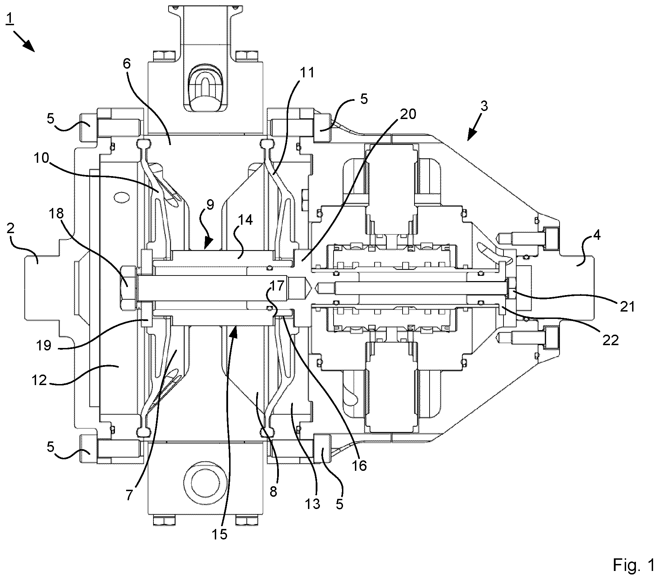

Die vorstehend beschriebene Erfindung wird im Folgenden anhand eines Ausführungsbeispiels näher erläutert. Hierzu zeigt Figur 1 eine Doppelmembranpumpe nach dem Central-Flow-Prinzip mit einer Membranstange mit einer Gleitbeschichtung in einer seitlichen Querschnittsdarstellung.

Eine solche Doppelmembranpumpe 1 ist im Wesentlichen aus einem Mittelblock 6 aufgebaut, welcher einerseits durch einen Deckel 2 und andererseits durch einen Antrieb 3 abgeschlossen ist. Gehäuseteile können noch zwischengelegt sein, in welchen bevorzugt auch die erforderliche Luftführung aufgenommen ist, in die erste Druckkammer 12 hinter der ersten Membran 10, sowie die zweite Druckkammer 13 hinter der zweiten Membran 11 abwechselnd mit Druckluft zu versorgen. Hierzu dient der Antrieb 3 sowohl als mechanischer als auch als Pneumatikantrieb. Mithilfe von Verbindungsschrauben 5 ist der Antrieb 3 einerseits und der Deckel 2 andererseits mit den Gehäuseteilen der Doppelmembranpumpe 1 verbunden, in deren Mitte der Mittelnlock 6 aufgenommen ist. Die Membranen 10 und 11 teilen die Membrankammern in eine erste Medienkammer 7 und eine erste Druckkammer 12 sowie eine zweite Medienkammer 8 und eine zweite Druckkammer 13.

Die beiden Membranen sind über eine Membranstange 14 miteinander verbunden, so dass sie sich im Gleichtakt bewegen. Hierbei durchquert die Membranstange 14 eine Durchführöffnung 9 des Mittelblocks 6, welcher vollständig aus Edelstahl hergestellt ist. Die Membranstange 14 ist ebenfalls aus Edelstahl hergestellt, aber zwischen ihren Verjüngungen 16 mit einer Gleitbeschichtung aus Polytetrafluorethylen beschichtet, so dass die Mantelfläche der Membranstange 14 mit der Durchgriffsöffnung 9 des Mittelblocks dichtend abschließt, aber gleitend darin geführt ist. Dadurch, dass die Medienkammern 7 und 8 nur aus den Membranen 10 und 11 selbst, sowie den durchgehend aus Edelstahl hergestellten Wänden des Mittelblocks 6 bestehen, insbesondere auf eingepresste Gleitlager in der Durchgriffsöffnung 9 verzichtet wird, können sich keine Keime in den Medienkammern 7 und 8 bilden und die Doppelmembranpumpe 1 ist besonders leicht zu reinigen. Eine Schnittstelle besteht nur zwischen dem Mittelblock 6 und den Membranen 10 und 11 und zwischen den Membranen 10 und 11 und der Membranstange 14. Allerdings ist die Stirnfläche der Verjüngungen 16 auch mit einer Dichtung 17 zwischen Membranen 10 und 11 und der Membranstange 14 versehen, so dass ein zusätzliches Eindringen von Keimen auch dort nicht festzustellen ist.

**In** der vorliegenden Ausgestaltung ist die Membranstange 14 als Hohlröhre ausgeführt und wird mit einem Anschlusselement 20 an dem Antrieb 3 angeschlossen, welches aufseiten der Membranstange 14 über eine erste Schraube 18 und eine erste Hülse 19, sowie von der Seite des Antriebs mit einer zweiten Schraube 21 und einer zweiten Hülse 22 befestigt wird. Zugänglich sind die zweite Schraube 21 und die zweite Hülse 22 über einen Antriebsdeckel 4 im Gehäuse des Antriebs 3.

Vorstehend beschrieben ist somit eine Doppelmembranpumpe, bei der einerseits eine dauerhaft belastbare Gleitlagerung realisiert wird, aber eine hygienische Lösung geschaffen wird, in der eine Keimbildung in den Randbereichen zusammengefügter Bauteile vermieden werden kann.

### BEZUGSZEICHENLISTE

- 1: Doppelmembranpumpe
- 2: Deckel
- 3: Antrieb
- 4: Antriebsdeckel
- 5: Verbindungsschrauben
- 6: Mittelblock
- 7: erste Medienkammer
- 8: zweite Medienkammer
- 9: Durchgriffsöffnung
- 10: erste Memran
- 11: zweite Membran
- 12: erste Druckkammer
- 13: zweite Druckkammer
- 14: Membranstange
- 15: Gleitbeschichtung
- 16: Verjüngung
- 17: Dichtung
- 18: erste Schraube
- 19: erste Hülse
- 20: Anschlusselement
- 21: zweite Schraube
- 22: zweite Hülse

## Patentansprüche

1. Doppelmembranpumpe mit zwei von einem Mittelblock (6) separierten Membrankammern, in denen mithilfe jeweils einer Membran (10, 11) an den Mittelblock (6) angrenzende Medienkammern (7, 8) abgegrenzt sind, wobei die Membranen (10, 11) durch eine Durchgriffsöffnung (9) des Mittelblocks (6) hindurch vermittels einer Membranstange (14) miteinander verbunden sind,
**dadurch gekennzeichnet, dass** die Durchgriffsöffnung (9) ein Gleitlager aufweist, welches die Membranstange (14) kontaktiert und aus dem Material des Mittelblocks (6) hergestellt ist, und die Membranstange (14) eine Mantelfläche aufweist, welcher eine durchgehende Gleitbeschichtung (15) zugeordnet ist.

2. Doppelmembranpumpe gemäß Anspruch 1, **dadurch gekennzeichnet, dass** der Mittelblock (6) beiderseits eine an die jeweilige Membran (10, 11) anschließende Medienkammerwandung einstückig und fugenlos ausbildet.

3. Doppelmembranpumpe gemäß einem der Ansprüche 1 oder 2, **dadurch gekennzeichnet, dass** an dem Mittelblock (6) auftretende Kanten verrundet sind.

4. Doppelmembranpumpe gemäß einem der vorhergehenden Ansprüche, **dadurch gekennzeichnet, dass** der Mittelblock (6) aus Edelstahl oder einer Edelstahllegierung hergestellt ist.

5. Doppelmembranpumpe gemäß einem der vorhergehenden Ansprüche, **dadurch gekennzeichnet, dass** die Membranstange (14) endständige Verjüngungen (16) zur Durchführung durch die Membranen (10, 11) aufweist, wobei die Gleitbeschichtung (15) lediglich zwischen den Verjüngungen (16) aufgebracht ist.

6. Doppelmembranpumpe gemäß einem der vorhergehenden Ansprüche, **dadurch gekennzeichnet, dass** die Membranstange (14) endständige Anschlussmittel zur Verbindung mit einem Antrieb (3) aufweist.

7. Doppelmembranpumpe gemäß einem der Ansprüche 1 bis 5, **dadurch gekennzeichnet, dass** die Membranstange (14) als Hohlröhre ausgebildet ist, durch welche Anschlussmittel (18, 19, 20, 21, 22) zur Verbindung mit einem Antrieb (3) hindurchgeführt sind.

8. Doppelmembranpumpe gemäß einem der Ansprüche 6 oder 7, **dadurch gekennzeichnet, dass** es sich bei dem Antrieb (3) um einen elektrischen oder pneumatischen Antrieb handelt und dieser als Ganzes mit einem Gehäuseteil an die Doppelmembranpumpe (1) anbringbar ist.

9. Doppelmembranpumpe gemäß einem der vorhergehenden Ansprüche, **dadurch gekennzeichnet, dass** die Membranstange (14) aus Edelstahl oder einer Edelstahllegierung hergestellt ist.

10. Doppelmembranpumpe gemäß einem der vorhergehenden Ansprüche, **dadurch gekennzeichnet, dass** es sich bei der Gleitbeschichtung (15) um eine Kunststoffbeschichtung, vorzugsweise eine Beschichtung aus Polytetrafluorethylen, handelt.

## Geänderte Patentansprüche

### Geänderte Patentansprüche gemäss Regel 137(2) EPÜ.

1. Doppelmembranpumpe mit zwei von einem Mittelblock (6) separierten Membrankammern, in denen mithilfe jeweils einer Membran (10, 11) an den Mittelblock (6) angrenzende Medienkammern (7, 8) abgegrenzt sind, wobei die Membranen (10, 11) durch eine Durchgriffsöffnung (9) des Mittelblocks (6) hindurch vermittels einer Membranstange (14) miteinander verbunden sind,
wobei die Durchgriffsöffnung (9) ein Gleitlager aufweist, welches die Membranstange (14) kontaktiert und aus dem Material des Mittelblocks (6) hergestellt ist, und die Membranstange (14) eine Mantelfläche aufweist, welcher eine durchgehende Gleitbeschichtung (15) zugeordnet ist,
**dadurch gekennzeichnet, dass** die Membranstange (14) endständige Verjüngungen (16) zur Durchführung durch die Membranen (10, 11) aufweist, wobei die Gleitbeschichtung (15) lediglich zwischen den Verjüngungen (16) aufgebracht ist.

2. Doppelmembranpumpe gemäß Anspruch 1, **dadurch gekennzeichnet, dass** der Mittelblock (6) beiderseits eine an die jeweilige Membran (10, 11) anschließende Medienkammerwandung einstückig und fugenlos ausbildet.

3. Doppelmembranpumpe gemäß einem der Ansprüche 1 oder 2, **dadurch gekennzeichnet, dass** an dem Mittelblock (6) auftretende Kanten verrundet sind.

4. Doppelmembranpumpe gemäß einem der vorhergehenden Ansprüche, **dadurch gekennzeichnet, dass** der Mittelblock (6) aus Edelstahl oder einer Edelstahllegierung hergestellt ist.

5. Doppelmembranpumpe gemäß einem der vorhergehenden Ansprüche, **dadurch gekennzeichnet, dass** die Membranstange (14) endständige Anschlussmittel zur Verbindung mit einem Antrieb (3) aufweist.

6. Doppelmembranpumpe gemäß einem der Ansprüche 1 bis 4, **dadurch gekennzeichnet, dass** die Membranstange (14) als Hohlröhre ausgebildet ist, durch welche Anschlussmittel (18, 19, 20, 21, 22) zur Verbindung mit einem Antrieb (3) hindurchgeführt sind.

7. Doppelmembranpumpe gemäß einem der Ansprüche 5 oder 6, **dadurch gekennzeichnet, dass** es sich bei dem Antrieb (3) um einen elektrischen oder pneumatischen Antrieb handelt und dieser als Ganzes mit einem Gehäuseteil an die Doppelmembranpumpe (1) anbringbar ist.

8. Doppelmembranpumpe gemäß einem der vorhergehenden Ansprüche, **dadurch gekennzeichnet, dass** die Membranstange (14) aus Edelstahl oder einer Edelstahllegierung hergestellt ist.

9. Doppelmembranpumpe gemäß einem der vorhergehenden Ansprüche, **dadurch gekennzeichnet, dass** es sich bei der Gleitbeschichtung (15) um eine Kunststoffbeschichtung, vorzugsweise eine Beschichtung aus Polytetrafluorethylen, handelt.
